# EUROPEAN PATENT SPECIFICATION

(11) **EP 4 011 667 B1**
(45) Date of publication and mention of the grant of the patent: **14.08.2024**
(21) Application number: 21212604.9
(22) Date of filing: 06.12.2021
(51) Int. Cl.: B60J 10/80, B61D 25/00, G01L 5/00, G01M 13/005

(54) **PORTABLE DEVICE AND METHOD FOR CHECKING THE TIGHTNESS OF MEANS FOR CONNECTING A GLASS TO A WALL**
TRAGBARE VORRICHTUNG UND VERFAHREN ZUR PRÜFUNG DER DICHTIGKEIT EINER GLASS-WAND-VERBINDUNG
DISPOSITIF PORTABLE ET PROCEDE DE CONTROLE DE L'ETANCHEITE DES MOYENS DE LIAISON D'UNE VITRE A UN MUR

(30) Priority: 09.12.2020 IT 202000030233
(43) Date of publication of application: 15.06.2022
(73) Proprietor: LCI ITALY S.R.L., 50026 San Casciano Val di Pesa (FI) (IT)
(72) Inventor: ALBERTELLI, Carlo, Varese (IT)
(74) Representative: Firmati, Leonardo

(56) References cited:
- CN-A- 109 253 886
- DE-A1- 102011 115 001
- US-A1- 2016 258 862

## Description

This invention relates to a portable device and a method for checking the tightness of means for connecting a glass to a wall.

More specifically, the control device and method according to the invention are used for evaluating the tightness of a means for connecting a glass of a vehicle, such as, for example, an automobile, a train, a bus, an aircraft or another similar vehicle.

During the installation of the glass on vehicles particular attention must be paid to its correct position, especially in order to guarantee an adequate tightness of the connecting means.

This aspect is even more important if it is necessary to guarantee a perfect tightness, that is to say, when it is important to avoid infiltrations of air, water or other materials between the glass and the frame, or between the glass and the wall, so as to guarantee, for example, perfect insulation of the environment inside a vehicle.

Checks of this type are currently performed manually, that is to say, by applying a force, not well predetermined, to the glass.

Clearly, this system is very approximate and not very reliable, such that it cannot provide an objective determination of the tightness of a means for connecting a glass to a wall.

In this regard, further prior art solutions involve the use of dynamometers, in such a way as to better determine the force applied to the glass during the stressing.

An example of a vehicle door sealing test based on a mechanical deformation of the door is described in patent documents CN109253886. A drawback of these prior art systems is the fact that it is not possible to immediately check the tightness of the connecting means, therefore having to trust in the observation capacity of the operator and providing a measurement subject to the interpretation of the operator.

There are also prior art solutions for measuring the tightness of a connecting means which use gas.

More specifically, the method consists in striking the connecting means with a gas current and then measuring the quantity of filtered gas through it.

Usually, these solutions use an intake hood and a ventilation station to guarantee the correct passage of the flow of air or gas through the connecting means. These systems have the disadvantage of being cumbersome and heavy, as well as having a considerable structural complexity.

Moreover, their structure negatively limits their use in emergency or restricted situations, which, on the other hand, require a greater flexibility of use.

The aim of the invention is therefore to provide a portable device and a method for checking the tightness of means for connecting a glass to a wall which is able to overcome the above-mentioned drawbacks of the prior art.

A further aim of the invention is to provide a device which is easy to use and simple and inexpensive to make.

According to the invention, these aims and others are achieved by a portable device and a method for checking the tightness of means for connecting a glass to a wall having the technical features described in the appended claims.

The technical features of the invention, with reference to the above-mentioned aims, are clearly described in the appended claims and its advantages are apparent from the detailed description which follows, with reference to the accompanying drawings which illustrate purely non-limiting example embodiments of the invention, in which:
- Figure 1 is a schematic perspective view of an embodiment of the portable device for checking the tightness of means for connecting a glass to a wall according to the invention;
   Figure 2 is an exploded schematic view of a detail of Figure 1;
- Figure 3 is a schematic side elevation view of the device of Figure 1;
- Figure 4 is a schematic side elevation view from a different angle of the device of Figure 1;
- Figure 5 is a schematic view from above of the device of Figure 1;
- Figure 6 schematically illustrates the steps of a first embodiment of the method for checking the tightness of means for connecting a glass to a wall according to the invention;
- Figure 7 schematically illustrates the steps of a second embodiment of the method for checking the tightness of means for connecting a glass to a wall according to the invention;
- Figure 8 schematically illustrates the sub-steps of one of the steps of the method of Figure 7;
- Figure 9 schematically illustrates the steps of a third embodiment of the method for checking the tightness of means for connecting a glass to a wall according to the invention.

With reference to the accompanying drawings, the numeral 1 denotes in its entirety a portable device for checking the tightness of a means MC for connecting a glass V to a wall P according to the invention, hereinafter also referred to simply as the device 1.

Hereinafter, the term "glass V" is used to mean not only a sheet of glass, but also a sheet of any other transparent, semi-transparent or opaque material, even of synthetic origin, and designed to be placed on a wall P of a vehicle.

The term "glass V" also means a double-glazing unit, formed by two or more sheets of glass coupled and separated by an insulating gap, for example filled with gas.

The term "frame" is used to mean a glass containment structure V, to which the glass V is connected.

The term "frame" is also used to mean a structure connected to the wall P, or to the counterframe, and to which the glass V is connected.

The frame is connected to a wall P, with or without a counterframe.

The term counter-frame is used to mean a structure connected to the wall P, and to which the frame is connected.

The frame and/or the counterframe are optional elements, that is to say, in some embodiments they are present, whilst in other embodiments they are not present.

In these solutions, the glass V is connected directly to the wall P.

The glass V and the frame as a whole form a window.

The counterframe, where present, is considered as an integral part of the wall.

The term wall P means a separate element, made of different material or the same as the glass V, positioned at the limit of glass, or of the window, or located at a part of that limit.

The term "connecting means MC" means the element, or elements, which make the above-mentioned connection between the glass V and the wall.

The term "connecting means MC" is also used to mean the element, or elements, which make the above-mentioned connection between the glass V and the frame and/or the counterframe, if the frame and/or counterframe are present.

With reference to the accompanying drawings, the connecting means MC are of the continuous type, as in the case of a welding or a gluing.

Advantageously, this type of connecting means MC is used between the glass V and the frame.

According to embodiments not illustrated, the connecting means MC are of the discrete type, such as in the case of spot welding or fixing with screws, threaded inserts or similar means.

Advantageously, this type of connecting means MC is used for connecting the window, or the glass, to the wall P, or the counterframe to the frame.

According to other embodiments not illustrated, the connecting means MC comprise a combination of connecting means MC of the continuous type and of the discontinuous type.

When the connecting means MC comprise gluing, the gluing is made of a material chosen from among glue, resin, adhesive material, heat-sealable material or the like, or a combination of them.

The term "tightness" means the capacity of the connecting means MC to withstand a shear and/or traction force. The term "component of the device" is used to mean the parts or elements which make up the device.

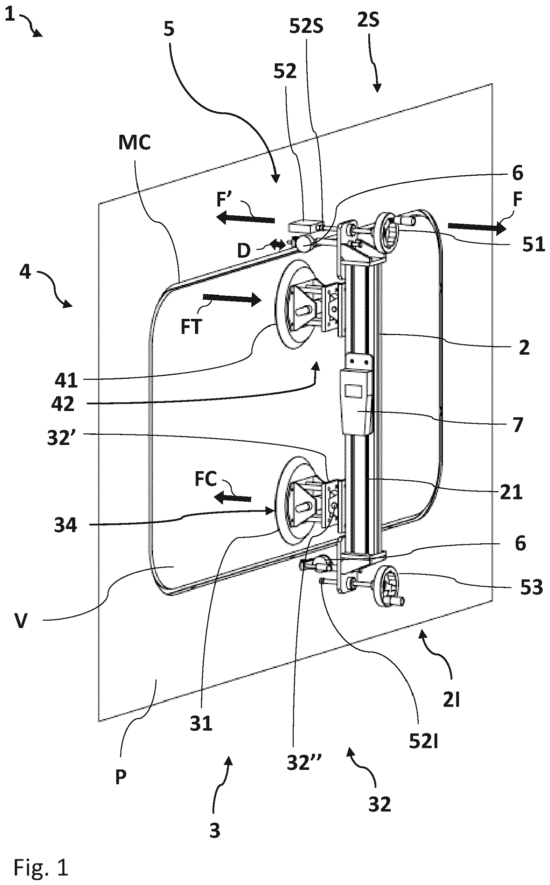

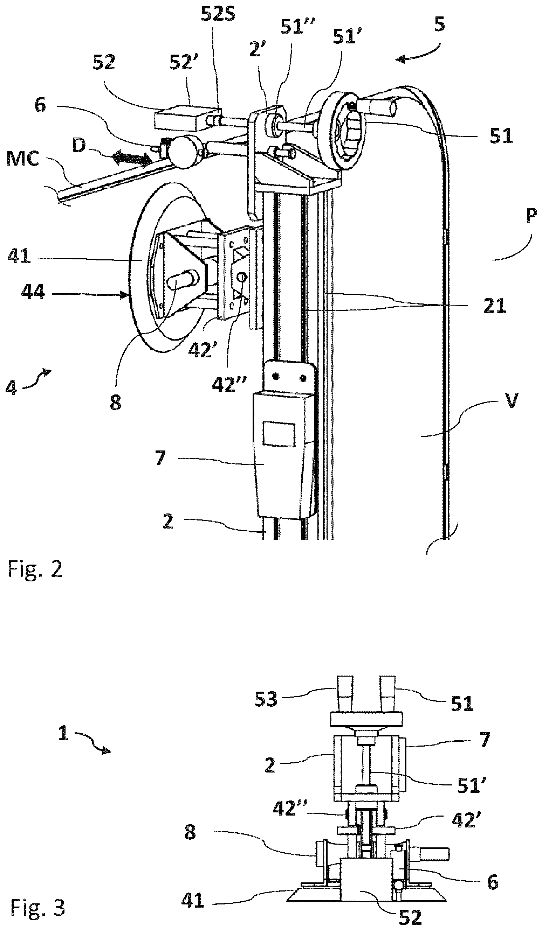

With reference to Figures 1 and 2, the glass V is glued to the wall P, without using a frame and/or counterframe. With reference to Figures 1 to 5, the device 1 comprises a supporting body 2, a first 3 and a second 4 gripping unit, an actuator 5, and a position sensor 6.

In particular, with reference to Figures 1 to 5, the supporting body 2 is made in an elongate and linear form in such a way as to be positioned in use with its upper 2S and lower 2I ends on the wall P.

It may be understood that the size and length of the supporting member 2 is variable according to the dimensions of the window.

The supporting body 2 is, for example, made of aluminium to make the device 1 light and easy to handle. Products suitable for the purpose are, for example, aluminium profile sections with a cross section of approximately 80 mm x 40 mm.

The use of standard type profiled sections increases the versatility of the device 1 and reduces the production costs of the device itself.

The supporting body 2 comprises seats 21 for positioning further components, such as, for example, sensors.

The seats 21 are also designed for fixing a command and control unit 7, as illustrated in Figures 1, 2, 4 and 5. The device 1 comprises a first gripping unit 3.

The first gripping unit 3 is operatively connected to the supporting body 2.

The first gripping unit 3 is configured to be positioned and constrained on the glass V during the use of the device 1.

The first gripping unit 3 comprises a suction cup 31 and a hinge 32.

The suction cup 31 is designed to be constrained to the glass V and to transfer to the glass V a predetermined force F acting on the supporting body 2.

The force F is transferred in the form of a predetermined compressive force FC, when the force F acting is a traction force, as illustrated in Figure 1.

The suction cup 31 is configured to stably fix to the glass V and to the hinge 32.

In this way, as well as guaranteeing the stability of the device 1 during the checking of the tightness it is possible to use the device 1 both in a horizontal and vertical position.

Moreover, the suction cup 31 makes it possible to keep the device 1 in position during use, without adversely affecting the integrity of the glass V.

The hinge 32 is operatively connected to the suction cup 31 and to the supporting body 2, to allow the supporting body 2 to rotate according to an axis at right angles to the supporting body 2 and contained in a plane substantially parallel to the glass V.

More specifically, the hinge 32 is configured in such a way that, in use, the supporting body 2 is allowed to rotate according to an axis passing through the axis of the hinge and contained in a plane substantially parallel to the glass V.

The hinge 32 comprises a spacer 32' and a pin 32''.

The spacer 32' is stably connected to the suction cup 31.

The pin 32'' operatively connects the spacer 32' and the supporting body 2 to each other.

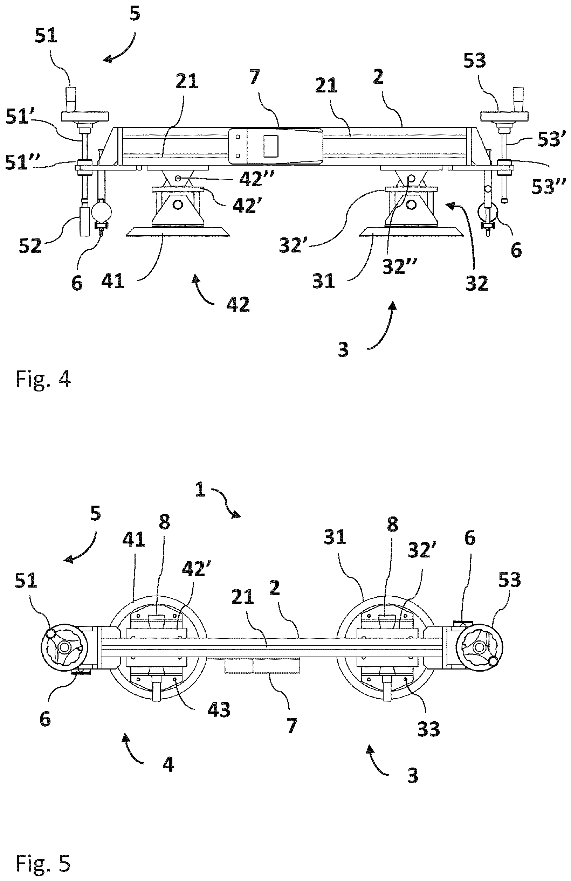

With reference to Figure 5, the first gripping unit 3 comprises screws 33 for connecting the suction cup 31 to the spacer 32'.

The device 1 comprises a second gripping unit 4.

The second gripping unit 4 is operatively connected to the supporting body 2.

The second gripping unit 4 is configured to be positioned and constrained on the glass V during the use of the device 1.

With reference to the accompanying drawings, the second gripping unit 4 is structurally similar to the first gripping unit 3.

More specifically, the second gripping element 4 comprises a suction cup 41 and a hinge 42.

The suction cup 41 is designed to be constrained to the glass V and to transfer to the glass V a predetermined force F acting on the supporting body 2.

The force F is transmitted in the form of a predetermined traction force FT, when the force F acting is a traction force, as illustrated in Figure 1.

More specifically, the suction cup 41 is configured to be stably fixed to the glass V and to the hinge 42.

In this way, as well as guaranteeing the stability of the device 1 during the checking of the tightness it is possible to use the device 1 both in a horizontal and vertical position.

Moreover, the suction cup 41 makes it possible to keep the device 1 in position during use, without adversely affecting the integrity of the glass V.

The hinge 42 is operatively connected to the suction cup 41 and to the supporting body 2, to allow the supporting body 2 to rotate according to an axis at right angles to the supporting body 2 and contained in a plane substantially parallel to the glass V.

The hinge 42 comprises a spacer 42' and a pin 42''.

The spacer 42' is stably connected to the suction cup 41.

The pin 42'' operatively connects the spacer 42' and the supporting body 2 to each other.

With reference to Figure 5, the second gripping unit 4 comprises screws 43 for connecting the suction cup 41 to the spacer 42'.

The suction cups 31 and 41 advantageously have a high strength.

That is to say, such as to withstand the effects of a predetermined force F acting on the supporting body 2. Advantageously, the force which the suction cups are able to withstand is between 350 N and 1000 N.

For greater forces, larger suction cups are used.

The first unit 3 and the second unit 4 are interposed between the ends 2S (upper) and 2I (lower) of the supporting body 2.

The device 1 also comprises an actuator 5 operatively connected to the supporting body 2.

The actuator 5 is configured to stress in traction the glass V when a predetermined force F acting on the supporting body 2 is imparted in the proximity of the connecting means MC.

The actuator 5 is also configured in such a way that a predetermined reaction compressive force F' acts on the wall P when the force F acting on the supporting body 2 is a traction force.

The compressive force F' represents the reaction force acting on the wall P and which is generated in response to the force F acting on the supporting body 2. Advantageously, the predetermined compressive force F' acts close to the end of the supporting body 2.

The actuator 5 comprises a crank 51.

The crank 51 comprises an operating screw 51' keyed to the crank 51 to impart the acting force F.

The crank 51 is operatively connected to the supporting body 2 and is configured to exert the predetermined force F acting on the supporting body 2.

The crank 51 is advantageously located at the upper end 2S of the supporting body 2.

With reference to Figures 1 to 5, the crank 51 is of the manual type.

The manual actuation of the actuator 5 is performed with the crank 51.

By tightening the actuator 5 on the supporting body 2, a predetermined compressive force F' is imparted on the wall P by reaction.

Similarly, rotating the actuator 5 in the opposite direction reduces the predetermined compressive force F' applied on the wall P.

The actuator 5 is positioned at one end 2S or 2I of the supporting body 2.

Again with reference to Figures 1 to 5, two cranks, 51 and 53, both of a manual type and positioned on opposite sides of the supporting body 2, are used. Advantageously, the crank 51 and the crank 53 are inserted in a respective site 2' formed on the supporting body 2.

The respective operating screws 51' and 53', engage a respective threaded bushing 51'' and 53'', inserted in the site 2' and rigidly connected to the supporting body 2.

According to the solution comprising two cranks 51, 53, that is to say, two actuators 5, these are each located on a respective end 2S, 2I of the supporting body 2. The configuration is therefore with the first unit 3 and the second unit 4 both interposed between the two actuators 5.

With reference to Figure 2, two of the above-mentioned sites 2' are made in the proximity of the ends of the supporting body 2.

The actuator 5 comprises a force sensor 52.

The force sensor 52 is operatively connected to the supporting body 2 for measuring the predetermined compressive force F' acting on the wall P.

The force sensor 52 is advantageously located between the crank 51 and the wall P to measure the predetermined compressive force F'.

The force sensor 52 is, for example, in the form of a dynamometer, for example digital.

Advantageously, forces of less than 500 N are applied with the device 1 with a resolution advantageously equal to approximately 0.5 N.

More specifically, the force sensor 52, shown in the drawings, comprises a transducer 52' positioned on the supporting body 2 between the crank 51 and the wall P. The term transducer is used, for example, to mean a load cell with extensometers.

The force sensor 52 is of the removable type.

That is to say, the force sensor 52 is, when necessary, inserted and removed from its housing seat (52S, 521), as illustrated in Figure 2.

In this way it is advantageously possible to apply the force sensor 52 on the end of interest of the supporting body 2.

For this purpose, the device 1 comprises two housing seats 52S and 52I.

With reference to the accompanying drawings, the force sensor 52 is applied in the proximity of the top part of the glass V.

With reference to Figure 1, the force sensor 52 is inserted in the housing seat 52S in the upper end 2S of the supporting body 2.

If, vice versa, the measurement is performed on the low edge of the glass V, the force sensor 52 is inserted in the housing seat 521 in the lower end 2I of the supporting body 2.

The housing seats 52I and 52S are positioned at the respective cranks 51 and 53, in such a way as to ensure that the force sensor 52 measures the predetermined compressive force F' at the direction of application of the predetermined force F acting on the supporting body 2.

The device 1 also comprises at least one position sensor 6 operatively connected to the supporting body 2.

The position sensor 6 is configured to measure the deviation D between the wall P and the glass V when the wall P and the glass V are subjected respectively to the predetermined compression F' and traction FT forces. With reference to Figures 1 to 5, the position sensor 6 is in the form of a digital comparator. Advantageously, the device 1 measures deviations D of less than approximately 15 mm with a resolution equal to approximately 0.01 mm.

Advantageously, the deviations measured are less than approximately 3 mm.

The position sensor 6, integral with the supporting body 2, is advantageously misaligned, that is to say, not aligned with the transducer 52'.

In this way, the position sensor 6 is advantageously positioned to the side of the glass V, with suitable angles on the basis of the shape of the glass V.

The position sensor 6 and the force sensor 52 define the sensors for the device 1.

The device 1 also comprises a control unit 7, as illustrated in Figures 1, 2 and 4.

The command and control unit 7 is configured for calibrating and resetting the device 1, for commanding and controlling the device 1 and its components, for saving the deviation D and for returning and comparing at least two different deviations D.

The command and control unit 7 comprises a memory unit for storing the deviation D, and for returning and comparing at least two different deviations D.

The command and control unit 7 also comprises a user interface configured for recalling and comparing at least two different deviations D.

The device 1 according to the invention is such that the first gripping unit 3 defines the fulcrum of a second class lever for the second gripping unit 4 and the actuator 5.

More specifically, with reference to Figure 1, the pin 32" of the hinge 32 forms the fulcrum of the second class lever.

The supporting body 2 acts as a rigid rod for the lever on which the predetermined force F and the predetermined force FT act, in a reverse direction relative to the same force which acts on the glass V.

With reference to the accompanying drawings, the predetermined force F defines the driving force which acts on the lever, that is to say, on the supporting body 2, and the predetermined force FT defines the resistance which acts on the lever.

With reference to Figures 1 to 5, the device 1 comprises a pump 8.

More specifically, with reference to the drawings, the pump 8 is integrated in each of the suction cups 31 and 41.

The pump 8 is configured to act on at least one of the suction cups 31 and 41.

More specifically, the pump creates a negative pressure between the supporting surface (33, 43) of the suction cups (31, 41) and the glass V.

In this way, the device 1 is advantageously kept in position on the glass V even when a higher predetermined force F is applied.

The pump makes it possible to prevent the detachment of the suction cups 31 and/or 41 from the glass V, a situation which could adversely affect the detection and the integrity of the device 1.

In this way it is also possible to guarantee a greater reliability and precision in the checking of the tightness of the connecting means MC.

The suction cup is designed, for example in terms of its diameter, on the basis of parameters such as the predetermined force F, shape or thicknesses of the glass V.

The device 1 comprises systems for signalling faults, activated by the command and control unit 7.

During use of the device 1, for example, the negative pressure between the suction cups (31, 41) and the glass V tends to decrease.

If a level of critical negative pressure is reached, that is to say, such as to adversely affect the stability of the device 1, an element for signalling the anomaly is activated.

According to embodiments not illustrated, the supporting body 2 is of the telescopic type so that it can be adapted to different sizes of the window.

According to other embodiments not illustrated, the supporting body 2 is of interchangeable type in order to be able to adapt to various dimensions of windows F. According to embodiments not illustrated, the seats 21 are designed for fixing gripping units, for example in the form of handles, on the supporting body 2. According to embodiments not illustrated, the seats 21 are, for example, made in the form of slots.

The slots, according to embodiments not illustrated, house threaded inserts.

According to embodiments not illustrated, the screws 33 and 43 are replaced at least partly by threaded inserts. According to embodiments not illustrated, the first 3 and second 4 gripping units have different shapes and dimensions.

This solution is advantageous if it is necessary to apply a different pressure on a part of the glass V. According to embodiments not illustrated, the actuator 5 is electrical.

According to embodiments not illustrated, the force sensor 52 is of the inductive or piezoelectric type. According to embodiments not illustrated, different types of position sensors 6 are provided.

For example, the position sensor 6, and the consequent detection of the deviation D, comprises the use of a vibrational-acoustic characterisation.

According to embodiments not illustrated, the command and control unit 7 comprises a database and/or a server connected to the device 1 for storing data, such as, for example, the deviations D.

According to embodiments not illustrated, the command and control unit 7 is made as an independent unit which can be detached from the device 1.

The command and control unit 7, according to embodiments not illustrated, can communicate in wireless, Bluetooth or remote mode with the sensors of the device 1.

In use, in order to check the tightness of a connecting means MC, the device 1 is placed on glass V, causing the suction cups 31 and 41 to adhere to the glass V.

More specifically, one of the two suction cups (31, 41) is positioned close to the connecting means MC for which the tightness is to be checked.

The suction cups 31 and 41 adhere to the glass V causing the air contained below the suction cup, that is, between the supporting surface 34 and 44 and the glass V, to escape.

Operating, for example, on a lever, not illustrated, the concavity of the suction cups 31 and 41 is flattened.

If the pump is present, the adhesion of the suction cups to the glass V is determined by the vacuum formed by the pump between the supporting surface 34 and 44 and the glass V.

The force sensor 52 is positioned at the end of the supporting body 2 affected by the measurement, and therefore closest to the connecting means MC.

With reference to the accompanying drawings, the force sensor 52 is positioned in such a way as to perform the measurement on the top edge of the glass V.

For this purpose, the force sensor 52 is inserted in the seat 52S in the upper end 2S of the supporting body 2, in such a way as to be able to measure the predetermined compressive force F' acting on the wall P.

After positioning the device 1, a predetermined force F is applied acting on the supporting body 2.

The predetermined force F is reached gradually by rotating the crank 51.

In this way, the crank 51, by means of the supporting body 2, stresses the glass V, in a direction at right angles to the glass V, in the form of a predetermined traction force FT.

By reaction, the wall P is stressed with a predetermined compressive force F'.

The suction cup 41 is therefore in traction.

Whilst the suction cup 31 is compressed.

According to this configuration the hinge 32 represents the fulcrum of the second class lever.

The suction cup 31 also prevents the translation movements of the first gripping unit 3.

The supporting body 2 can therefore rotate about a fixed point which is the fulcrum of the lever.

No forces act at the crank 53.

The force sensor 52 measures the predetermined compressive force F' applied to the wall P.

The position sensor 6 measures the deviation D recorded following the application of the predetermined compressive force F'.

If, vice versa, the measurement is performed on the bottom edge of the glass V, the force sensor 52 is inserted in the seat 52I at the crank 53.

The predetermined force F acting on the supporting body 2 is reached gradually by rotating the crank 53. Consequently, a predetermined traction force FT acts on the suction cup 31, and hence on the glass V.

A predetermined compressive force F' is generated by reaction on the wall P.

According to this configuration, not illustrated, the suction cup 41 is in compression, whilst the suction cup 31 is in traction.

Moreover, according to this configuration, the fulcrum of the second class lever is at the hinge 42.

No forces act on the crank 51.

When it is necessary to vary position of the device 1, or when it is necessary to interrupt the checking of the thickness of a connecting means MC, the suction cups 31 and 41 are detached from the glass V.

In order to detach the suction cups 31 and 41 air is introduced between the glass V and the surfaces 34 and 44 for supporting the glass V.

For this purpose, according to embodiments not illustrated, the device 1 comprises an air intake valve for each suction cup 31 and 41.

According to other embodiments not illustrated, the device 1 comprises manually type hooks for detaching the suction cups 31 and 41.

The hooks, when activated, allow the passage of air between the supporting surfaces 34 and 44 and the glass V, and consequently the detachment of the suction cups 31 and 41.

The deviation D between the panel P and the glass V is determined thanks to the correlation between the deviation D' between the wall P and the supporting body 2.

By measuring the movement D' between the wall P and the supporting body 2 it is possible to determine the deviation D between the wall P and the glass V.

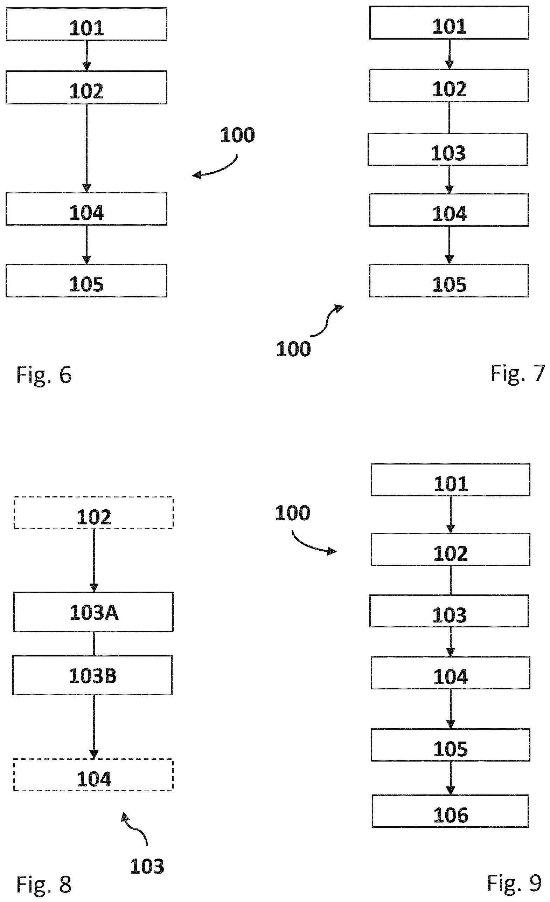

With reference to Figures 6 to 9, the numeral 100 denotes in its entirety a method for checking the tightness of a means MC for connecting a glass V to a wall P according to the invention, hereinafter also referred to simply as the method 100.

More specifically, Figure 6 shows an embodiment of the method 100 comprising the following steps.

A first step 101 in which a glass V previously connected to a wall P by connecting means MC is prepared and a step 102 wherein a device 1 according to the invention is prepared.

The device 1 is positioned close to the connecting means MC.

The step of preparing a glass V comprises the step, not illustrated, of selecting a glass V with a thickness of between 2 mm and 10 mm made of a material chosen from glass, laminated glass, hardened glass, Plexiglas, resin, polycarbonate, polyester or a combination of these.

The step 102 is followed by the step 104 wherein a predetermined force F acting on the supporting body 2 is applied, wherein the predetermined force F acting is a traction force.

Advantageously, the predetermined force F acting on the supporting body 2 is applied by using the crank in the proximity of the connecting means MC in which the tightness is to be checked.

This force, thanks to the supporting body 2 is transferred to the corresponding suction cup. Consequently, the glass V is subjected to a predetermined traction force FT.

Advantageously, the applied traction force FT is less than 600 N for glass V with a thickness of between 2 mm and 10 mm.

Step 104 is followed by step 105 wherein the deviation D between the wall P and the glass V is detected.

The step 105 of detecting the deviation D between the wall P and the glass V also comprises the step of detecting the deviation D' between the wall P and the supporting body 2.

Advantageously, firstly the deviation D' and then the deviation D is determined.

With reference to Figure 7, the method 100 comprises a further calibration step 103 before the step 104 of applying a predetermined compressive force F' on the wall P.

With reference to Figure 8, the calibration step comprises the following sub-steps.

The sub-step 103A of applying a preloading force FF acting on the supporting body 2 in the proximity of the connecting means MC, wherein the preloading force FF is a traction force.

In this way any clearances between the parts of the device 1, the glass V and the wall P are eliminated. The sub-step 103A is followed by the sub-step 103B of configuring the command and control unit 7 of the device 1 for setting the preloading force FF to a zero value for measuring the predetermined compressive force F'. In this way it is possible to calibrate the device 1. That is to say, the device 1 is placed in position on the glass V and on the panel P with the sensor (6, 52) and the command and control unit 7 set to zero in such a way that the subsequent measurements detected by the sensor sensors (6, 52) maintain an internal consistency. Figure 9 illustrates a further embodiment of the method 100 wherein, after the step 105 of measuring the deviation D between the wall P and the glass V, the method 100 comprises a step 106 for evaluating the quality of the tightness of the connecting means MC. The step 106 for evaluating the quality of the tightness is designed to compare the deviation D with deviation values previously saved.

The portable device and the method for checking the tightness of a means for connecting a window to the wall according to the invention achieve the preset aims and achieve important advantages.

A first advantage is due to the fact that the device acts in the proximity of the connecting means MC, also being able to detect small variations in the tightness of the connecting means MC, even in an immediate fashion. Yet another advantage is due to the fact that the device acts according to a second class lever, thus simplifying the structure and lightening the device.

Another advantage is due to the fact that the method according to the invention makes it possible to determine the quality of the connecting means MC and to monitor its deterioration over time.

A further advantage is due to the fact that the device and the method according to the invention provide a device and a method which are not influenced, or which are influenced only in a residual manner, by the manual ability, skill or experience of the operator.

In that way it is possible to standardise the procedures for checking the tightness of a means for connecting a window to the wall.

A further advantage of the device according to the invention is the possibility of providing a portable device which can also be used in simultaneous situations or for repeated monitoring at a predetermined time interval.

Another advantage is the ease of use of the device, that is to say, such that it does not require generators or other bulky devices to be powered, since the device 1 can be powered by a battery or with solar energy.

## Claims

1. A portable device to check the tightness of means (MC) for connecting a glass (V) to a wall (P), comprising:
- a supporting body (2) having an elongate shape and a first upper end (2S) and a second lower end (2I), said supporting body (2) being configured to be positioned with both said ends on the wall (P);
- a first gripping unit (3) and a second gripping unit (4) operatively connected to said supporting body (2) and interposed between said first upper end (2S) and said second lower end (2I) of said body (2), said first (3) and said second (4) gripping unit being configured to be positioned and constrained on said glass (V);
- at least one actuator (5) operatively connected at one of said first upper end (2S) and optionally another actuator (5) at said second lower end (2I) to said supporting body (2) and configured to apply a traction stress to said glass (V) imparting a predetermined force (F) acting on said supporting body (2) close to said connecting means (MC), in such a way that a predetermined reaction compressive force (F') acts on the wall (P) when said force (F) acting is a traction force of said supporting body (2),
- a position sensor (6) operatively connected to said supporting body (2) to measure the deviation (D) between said wall (P) and said glass (V) when said wall (P) and said glass (V) are subjected, respectively, to said predetermined compression (F') and traction (FT) forces, whereby that said first gripping unit (3) defines the fulcrum of a second class lever for said second gripping unit (4) and said actuator (5).

2. The device according to claim 1, **characterised in that** said first gripping unit (3) comprises:
- a suction cup (31) designed to be constrained to said glass (V) and designed to transfer said predetermined force (F) acting on said supporting body (2) to said glass (V) in the form of a predetermined compressive force (FC) when said force (F) acting is a traction force;
- a hinge (32) operatively connected to said suction cup (31) and to said supporting body (2) to allow said supporting body (2) to rotate according to an axis orthogonal to said supporting body (2) and contained in a plane substantially parallel to said glass (V).

3. The device according to any one of the preceding claims, **characterised in that** said second gripping unit (4) comprises:
- a suction cup (41) designed to be constrained to said glass (V) and designed to transfer said predetermined force (F) acting on said supporting body (2) to said glass (V) in the form of a predetermined traction force (FT) when said force (F) acting is a traction force;
- a hinge (42) operatively connected to said suction cup (41) and to said supporting body (2) to allow said supporting body (2) to rotate according to an axis orthogonal to the supporting body (2) and contained in a plane substantially parallel to the glass (V).

4. The device according to any one of the preceding claims, **characterised in that** said actuator (5) comprises a crank (51) operatively connected to said supporting body (2) and configured to exert said predetermined force (F) acting on said supporting body (2).

5. The device according to any one of the preceding claims, **characterised in that** said actuator (5) comprises a force sensor (52) operatively connected to said supporting body (2) for measuring said predetermined compression force (F') acting on said wall (P).

6. The device according to any one of the preceding claims, wherein said suction cup (31, 41) has a surface (34, 44) for supporting said glass (V), **characterised in that** it comprises a pump (8) configured to act on at least one of said suction cups (31, 41) creating a negative pressure between said supporting surface (34, 44) and said glass (V) .

7. The device according to any one of the preceding claims, **characterised in that** it comprises a command and control unit (7) configured to calibrate and reset the device, to command and control the device, to store the deviation (D) and to recall and compare at least two different deviations (D).

8. A method to check the tightness of means (MC) for connecting a glass (V) to a wall (P), comprising the steps of:
- preparing a glass (V) previously connected to a wall (P) by connecting means (MC);
- preparing a device according to claims 1 to 7 in the proximity of said connecting means (MC);
- applying a predetermined force (F) acting on said supporting body (2), said force (F) acting being a traction force;
- detecting the deviation (D) between said wall (P) and said glass (V).

9. The method according to claim 8, **characterised in that** it comprises, after the step of detecting the deviation (D) between said wall (P) and said glass (V), a step of evaluating the quality of the tightness of said connecting means (MC) designed to compare the deviation (D) with deviation values (D) previously stored.

10. The method according to claim 8, **characterised in that** said step of preparing a glass (V) comprises the step of selecting a glass (V) with a thickness of between 2 mm and 10 mm made of a material chosen from glass, laminated glass, hardened glass, Plexiglas, resin, polycarbonate, polyester, metal or a combination of these.

## Patentansprüche

1. Tragbare Vorrichtung zur Prüfung der Dichtigkeit von Mitteln (MC) zum Verbinden eines Glases (V) mit einer Wand (P), umfassend:
- einen Tragkörper (2), aufweisend eine längliche Form und ein erstes oberes Ende (2S) und ein zweites unteres Ende (2I), wobei der Tragkörper (2) dazu ausgelegt ist, mit beiden Enden an der Wand (P) positioniert zu werden;
- eine erste Greifeinheit (3) und eine zweite Greifeinheit (4), die betriebswirksam mit dem Tragkörper (2) verbunden sind und zwischen dem ersten oberen Ende (2S) und dem zweiten unteren Ende (2I) des Körpers (2) angeordnet sind, wobei die erste (3) und die zweite (4) Greifeinheit ausgelegt sind, um auf dem Glas (V) positioniert und festgehalten zu werden;
- mindestens einen Aktuator (5), betriebswirksam verbunden an einem des ersten oberen Endes (2S) und optional einen weiteren Aktuator (5) an dem zweiten unteren Ende (2I) mit dem Tragkörper (2) und so ausgelegt, dass eine Zugspannung auf das Glas (V) aufgebracht wird, die eine vorbestimmte Kraft (F) ausübt, die auf den Tragkörper (2) wirkt, der in der Nähe der Verbindungsmittel (MC) liegt, sodass eine vorbestimmte Reaktionsdruckkraft (F') auf die Wand (P) wirkt, wenn die wirkende Kraft (F) eine Zugkraft des Tragkörpers (2) ist,
- einen Positionssensor (6), der betriebswirksam mit dem Tragkörper (2) verbunden ist, um die Abweichung (D) zwischen der Wand (P) und dem Glas (V) zu messen, wenn die Wand (P) und das Glas (V) jeweils den vorbestimmten Kompressions- (F') und Zugkräften (FT) ausgesetzt sind, wodurch die erste Greifeinheit (3) den Drehpunkt eines Hebels zweiter Klasse für die zweite Greifeinheit (4) und den Aktuator (5) definiert.

2. Vorrichtung nach Anspruch 1, **dadurch gekennzeichnet, dass** die erste Greifeinheit (3) umfasst:
- einen Saugnapf (31), der so ausgebildet ist, dass er an das Glas (V) festgehalten wird und so ausgebildet ist, dass er die vorbestimmte Kraft (F), die auf den Tragkörper (2) wirkt, in Form einer vorbestimmten Druckkraft (FC) auf das Glas (V) überträgt, wenn die wirkende Kraft (F) eine Zugkraft ist;
- ein Scharnier (32), das betriebswirksam mit dem Saugnapf (31) und dem Tragkörper (2) verbunden ist, um zu ermöglichen, dass sich der Tragkörper (2) gemäß einer Achse orthogonal zu dem Tragkörper (2) dreht, die in einer Ebene im Wesentlichen parallel zu dem Glas (V) enthalten ist.

3. Vorrichtung nach einem der vorhergehenden Ansprüche, **dadurch gekennzeichnet, dass** die zweite Greifeinheit (4) umfasst:
- einen Saugnapf (41), der so ausgebildet ist, dass er an das Glas (V) festgehalten wird und so ausgebildet ist, dass er die vorbestimmte Kraft (F), die auf den Tragkörper (2) wirkt, in Form einer vorbestimmten Zugkraft (FT) auf das Glas (V) überträgt, wenn die wirkende Kraft (F) eine Zugkraft ist;
- ein Scharnier (42), das betriebswirksam mit dem Saugnapf (41) und dem Tragkörper (2) verbunden ist, um zu ermöglichen, dass sich der Tragkörper (2) gemäß einer Achse orthogonal zu dem Tragkörper (2) dreht, die in einer Ebene im Wesentlichen parallel zu dem Glas (V) enthalten ist.

4. Vorrichtung nach einem der vorhergehenden Ansprüche, **dadurch gekennzeichnet, dass** der Aktuator (5) eine Kurbel (51) umfasst, die betriebswirksam mit dem Tragkörper (2) verbunden und ausgelegt ist, um die vorbestimmte Kraft (F) auszuüben, die auf den Tragkörper (2) wirkt.

5. Vorrichtung nach einem der vorhergehenden Ansprüche, **dadurch gekennzeichnet, dass** der Aktuator (5) einen Kraftsensor (52) umfasst, der betriebswirksam mit dem Tragkörper (2) verbunden ist, um die vorbestimmte Kompressionskraft (F'), die auf die Wand (P) wirkt, zu messen.

6. Vorrichtung nach einem der vorhergehenden Ansprüche, wobei der Saugnapf (31, 41) eine Oberfläche (34, 44) zum Tragen des Glases (V) aufweist, **dadurch gekennzeichnet, dass** sie eine Pumpe (8) umfasst, die ausgelegt ist, um auf mindestens einen der Saugnäpfe (31, 41) einzuwirken, wodurch ein Unterdruck zwischen der Tragoberfläche (34, 44) und dem Glas (V) erzeugt wird.

7. Vorrichtung nach einem der vorhergehenden Ansprüche, **dadurch gekennzeichnet, dass** sie eine Befehls- und Steuereinheit (7) umfasst, die dazu ausgelegt ist, die Vorrichtung zu kalibrieren und zurückzusetzen, die Vorrichtung zu befehlen und zu steuern, die Abweichung (D) zu speichern und mindestens zwei verschiedene Abweichungen (D) abzurufen und zu vergleichen.

8. Verfahren zur Prüfung der Dichtigkeit von Mitteln (MC) zum Verbinden eines Glases (V) mit einer Wand (P), umfassend die folgenden Schritte:
- Vorbereiten eines Glases (V), das zuvor durch Verbindungsmittel (MC) mit einer Wand (P) verbunden wurde;
- Vorbereiten einer Vorrichtung nach den Ansprüchen 1 bis 7 in der Nähe der Verbindungsmittel (MC);
- Aufbringen einer vorbestimmten Kraft (F), die auf den Tragkörper (2) wirkt, wobei die wirkende Kraft (F) eine Zugkraft ist;
- Erfassen der Abweichung (D) zwischen der Wand (P) und dem Glas (V).

9. Verfahren nach Anspruch 8, **dadurch gekennzeichnet, dass** es nach dem Schritt zum Erfassen der Abweichung (D) zwischen der Wand (P) und dem Glas (V) einen Schritt zum Beurteilen der Qualität der Dichtigkeit der Verbindungsmittel (MC) umfasst, der dazu ausgebildet ist, die Abweichung (D) mit zuvor gespeicherten Abweichungswerten (D) zu vergleichen.

10. Verfahren nach Anspruch 8, **dadurch gekennzeichnet, dass** der Schritt zum Vorbereiten eines Glases (V) den Schritt zum Auswählen eines Glases (V) mit einer Dicke zwischen 2 mm und 10 mm aus einem Material umfasst, das aus Glas, Verbundglas, gehärtetem Glas, Plexiglas, Harz, Polycarbonat, Polyester, Metall oder einer Kombination davon ausgewählt ist.

## Revendications

1. Dispositif portable de contrôle de l'étanchéité des moyens (MC) de raccordement d'une vitre (V) à une paroi (P), comprenant :
- un corps de support (2) ayant une forme allongée et une première extrémité supérieure (2S) et une deuxième extrémité inférieure (2I), ledit corps de support (2) étant configuré pour être positionné avec lesdites deux extrémités sur la paroi (P) ;
- une première unité de préhension (3) et une deuxième unité de préhension (4) reliées fonctionnellement audit corps de support (2) et interposées entre ladite première extrémité supérieure (2S) et ladite deuxième extrémité inférieure (2I) dudit corps (2), ladite première (3) et ladite deuxième (4) unité de préhension étant configurées pour être positionnées et solidaires de ladite vitre (V) ;
- au moins un actionneur (5) relié fonctionnellement à une extrémité entre ladite première extrémité supérieure (2S) et éventuellement un autre actionneur (5) à ladite deuxième extrémité inférieure (2I) audit corps de support (2) et configuré pour appliquer une contrainte de traction sur ladite vitre (V) imprimant une force (F) prédéterminée agissant sur ledit corps de support (2) à proximité desdits moyens de raccordement (MC), de manière à ce qu'une force de compression (F') de réaction prédéterminée agisse sur la paroi (P) lorsque ladite force (F) agissante est une force de traction dudit corps de support (2),
- un capteur de position (6) relié fonctionnellement audit corps de support (2) pour mesurer l'écart (D) entre ladite paroi (P) et ladite vitre (V) lorsque ladite paroi (P) et ladite vitre (V) sont soumises, respectivement, auxdites forces de compression (F') et de traction (FT) prédéterminées, de manière à ce que ladite première unité de préhension (3) définit le point d'appui d'un levier de deuxième genre pour ladite deuxième unité de préhension (4) et ledit actionneur (5).

2. Dispositif selon la revendication 1, **caractérisé en ce que** ladite première unité de préhension (3) comprend :
- une ventouse (31) conçue pour être solidaire de ladite vitre (V) et conçue pour transférer ladite force (F) prédéterminée agissant sur ledit corps de support (2) à ladite vitre (V) sous la forme d'une force de compression (FC) prédéterminée lorsque ladite force (F) agissante est une force de traction ;
- une charnière (32) reliée fonctionnellement à ladite ventouse (31) et audit corps de support (2) pour permettre audit corps de support (2) de tourner selon un axe orthogonal audit corps de support (2) et contenu dans un plan sensiblement parallèle à ladite vitre (V).

3. Dispositif selon l'une quelconque des revendications précédentes, **caractérisé en ce que** ladite deuxième unité de préhension (4) comprend :
- une ventouse (41) conçue pour être solidaire de ladite vitre (V) et conçue pour transférer ladite force (F) prédéterminée agissant sur ledit corps de support (2) à ladite vitre (V) sous la forme d'une force de traction (FT) prédéterminée lorsque ladite force (F) agissante est une force de traction ;
- une charnière (42) reliée fonctionnellement à ladite ventouse (41) et audit corps de support (2) pour permettre audit corps de support (2) de tourner selon un axe orthogonal au corps de support (2) et contenu dans un plan sensiblement parallèle à la vitre (V).

4. Dispositif selon l'une quelconque des revendications précédentes, **caractérisé en ce que** ledit actionneur (5) comprend une manivelle (51) reliée fonctionnellement audit corps de support (2) et configurée pour exercer ladite force (F) prédéterminée agissant sur ledit corps de support (2) .

5. Dispositif selon l'une quelconque des revendications précédentes, **caractérisé en ce que** ledit actionneur (5) comprend un capteur de force (52) relié fonctionnellement audit corps de support (2) pour mesurer ladite force de compression (F') prédéterminée agissant sur ladite paroi (P).

6. Dispositif selon l'une quelconque des revendications précédentes, dans lequel ladite ventouse (31, 41) comporte une surface (34, 44) servant à supporter ladite vitre (V), **caractérisé en ce qu'**il comprend une pompe (8) configurée pour agir sur au moins l'une desdites ventouses (31, 41) en créant une pression négative entre ladite surface de support (34, 44) et ladite vitre (V).

7. Dispositif selon l'une quelconque des revendications précédentes, **caractérisé en ce qu'**il comprend une unité de commande et de contrôle (7) configurée pour étalonner et réinitialiser le dispositif, pour commander et contrôler le dispositif, pour stocker l'écart (D) et pour rappeler et comparer au moins deux écarts (D) différents.

8. Procédé de contrôle de l'étanchéité des moyens (MC) de raccordement d'une vitre (V) à une paroi (P), comprenant les étapes de :
- préparer une vitre (V) préalablement reliée à une paroi (P) par des moyens de raccordement (MC) ;
- préparer un dispositif selon les revendications 1 à 7 à proximité desdits moyens de raccordement (MC) ;
- appliquer une force (F) prédéterminée agissant sur ledit corps de support (2), ladite force (F) agissante étant une force de traction ;
- détecter l'écart (D) entre ladite paroi (P) et ladite vitre (V).

9. Procédé selon la revendication 8, **caractérisé en ce qu'**il comprend, après l'étape de détection de l'écart (D) entre ladite paroi (P) et ladite vitre (V), une étape d'évaluation de la qualité de l'étanchéité desdits moyens de raccordement (MC) conçue pour comparer l'écart (D) à des valeurs d'écart (D) préalablement stockées.

10. Procédé selon la revendication 8, **caractérisé en ce que** ladite étape de préparation d'une vitre (V) comprend l'étape de sélection d'une vitre (V) d'une épaisseur comprise entre 2 et 10 mm constituée d'un matériau choisi parmi le verre, le verre feuilleté, le verre trempé, le plexiglas, la résine, le polycarbonate, le polyester, le métal ou une combinaison de ceux-ci.
